# EUROPÄISCHE PATENTSCHRIFT

(11) **EP 4 508 344 B1**
(45) Veröffentlichungstag und Bekanntmachung des Hinweises auf die Patenterteilung: **11.11.2026**
(21) Anmeldenummer: 23808667.2
(22) Anmeldetag: 03.11.2023
(51) Int. Cl.: F16H 37/08, B62M 6/55

(54) **GETRIEBEEINHEIT FÜR EIN FAHRZEUG ZUR AUFSCHALTUNG VON ZWEI LEISTUNGSQUELLEN AUF EIN ABTRIEBSELEMENT**
TRANSMISSION UNIT FOR A VEHICLE FOR CONNECTING TWO POWER SOURCES TO AN OUTPUT ELEMENT
UNITÉ DE TRANSMISSION POUR UN VÉHICULE DESTINÉE À APPLIQUER DEUX SOURCES DE PUISSANCE À UN ÉLÉMENT DE SORTIE

(30) Priorität: 10.11.2022 DE 102022129784
(43) Veröffentlichungstag der Anmeldung: 19.02.2025
(73) Patentinhaber: REVOLUTE GmbH, 34127 Kassel (DE)
(72) Erfinder: BRAUN, Caspar, 34119 Kassel (DE); BENDEROTH, Maximilian, 40233 Düsseldorf (DE); SCHLERETH, Daniel, 97702 Münnerstadt (DE)
(74) Vertreter: Walther Bayer Faber Patentanwälte PartGmbB
(86) Internationale Anmeldenummer: PCT/EP2023/080682
(87) Internationale Veröffentlichungsnummer: WO 2024/099904

(56) Entgegenhaltungen:
- DE-A1- 102013 113 524
- DE-A1- 102018 131 682
- DE-A1- 102018 208 382
- GB-A- 2 618 309

## Beschreibung

Die Erfindung betrifft eine Getriebeeinheit für ein Fahrzeug, insbesondere Fahrrad, zur Aufschaltung von zwei Leistungsquellen auf ein Abtriebselement, aufweisend ein Schaltgetriebe, mit dem die erste Leistungsquelle, insbesondere ausgeführt als Tretkurbel des Fahrrades, in zumindest zwei Schaltstufen auf das Abtriebselement aufschaltbar ist, wobei das Schaltgetriebe eine erste Getriebekomponente und wenigstens eine zweite Getriebekomponente aufweist.

### STAND DER TECHNIK

Getriebeeinheiten für Fahrzeuge, insbesondere Fahrräder, sind auch für die Verwendung von zwei Leistungsquellen bekannt, wobei beide Leistungsquellen auf ein Abtriebselement aufgeschaltet werden können.

Das Abtriebselement bildet in der Regel eine Welle bzw. eine Tretkurbelachse, auf der ein Ritzel für ein Übertragungsmittel zur angetriebenen Achse des Fahrrades aufgebracht ist, beispielsweis ein Kettenritzel oder eine Riemenscheibe. Die erste Leistungsquelle bildet in der Regel selbst die Tretkurbel des Fahrrades, über die mit Muskelkraft eine Drehbewegung in die Getriebeeinheit eingeleitet wird, und elektrisch motorisierte Fahrräder weisen eine zweite Leistungsquelle in Form eines Elektromotors auf, dessen Antriebsleistung ebenfalls auf die Getriebeeinheit aufgeschaltet werden kann.

Das Schaltgetriebe als Kernbestandteil der Getriebeeinheit kann dabei manuell oder elektrisch, insbesondere mit Aktuatoren, beschaltet werden, und bildet allgemein ein schaltbares Getriebe. Das Fahrzeug kann ein Fahrrad mit einem Elektromotor betreffen, wobei auch Fahrzeuge mit Hybridantrieb eine solche Getriebeeinheit aufweisen können, beispielsweise Fahrzeuge mit einem Verbrennungsmotor und des Weiteren mit einem Elektromotor, wobei der Elektromotor wahlweise auf die Leistung des Verbrennungsmotors aufgeschaltet werden kann. So weisen auch solche Getriebeeinheiten die Möglichkeit auf, zwei Leistungsquellen auf ein Abtriebselement aufzuschalten, wobei jedoch die Aufschaltung, insbesondere der zweiten Leistungsquelle, in einem starren Verhältnis zur ersten Leistungsquelle erfolgt, beispielsweise wenn der Elektromotor auf dem Abtriebselement unmittelbar aufgebracht ist. Dies kann beispielsweise in Form einer Abtriebswelle ausgeführt werden, die direkt oder mit einer starren Getriebeverbindung mit dem rotierenden Teil des Elektromotors verbunden ist.

Beispielsweise offenbart die DE 10 2015 222 070 B4 eine Getriebeeinheit für ein Fahrrad, das zur Aufschaltung von zwei Leistungsquellen auf ein Abtriebselement ausgebildet und eingerichtet ist. Die Getriebeeinheit weist hierfür mehrere Getriebestufen auf, mit dem die erste Leistungsquelle, ausgeführt als Tretkurbel des Fahrrades, in zumindest zwei Schaltstufen auf das Abtriebselement aufschaltbar ist, wobei das Schaltgetriebe eine erste Getriebekomponente und wenigstens eine zweite Getriebekomponente aufweist, siehe beispielsweise Ausführung gemäß Figur 7. Nachteilhafterweise ist jedoch der Elektromotor zur Bildung der zweiten Leistungsquelle mit einem starren Drehmomentverhältnis mit dem Abtriebselement verbunden, wobei die Aufschaltung des Elektromotors unmittelbar auf die Abtriebswelle erfolgt, und so eine Änderung des Drehzahlverhältnisses des Elektromotors zur Drehzahl der Tretkurbel nicht möglich ist.

Ein Nachteil besteht darin, dass der elektrische Motor nicht ohne weiteres bauraumsparend an der Getriebeeinheit angeordnet werden kann, denn häufig wird die Elektromaschine koaxial zur Getriebemittelachse angeordnet, insbesondere, wenn die Leistung des Elektromotors als zweite Leistungsquelle über ein Stirnradgetriebe oder Umlaufgetriebe dem Schaltgetriebe der Getriebeeinheit aufgeschaltet wird. Ferner ist es wünschenswert, das Drehmoment des Elektromotors und damit der zweiten Leistungsquelle gangabhängig auf das Schaltgetriebe aufzuschalten, sodass die elektrische Leistung optimal auch auf das Abtriebselement, beispielsweise in Form der Abtriebswelle, übertragen werden kann.

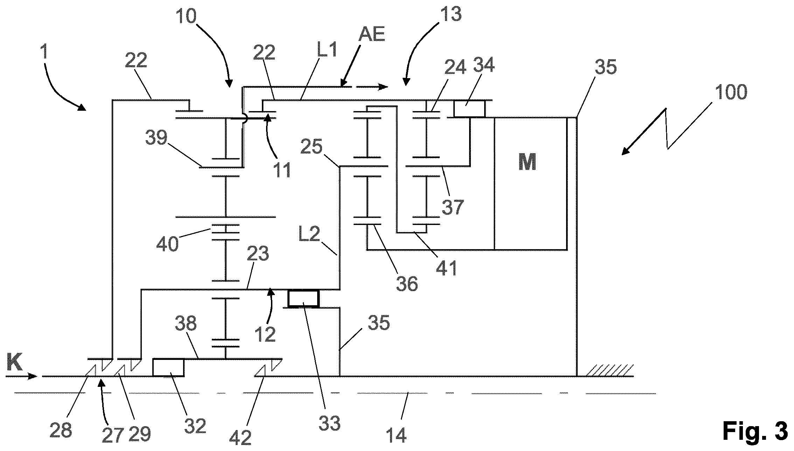

Beispielsweise offenbart die EP 0 650 886 A2 ein Fahrrad mit Gangschaltung, das zur Aufschaltung von einer oder zwei Leistungsquellen auf ein Abtriebselement ausgebildet und eingerichtet ist. Die Getriebeeinheit weist hierfür ein mehrstufiges schaltbares Hauptgetriebe auf, mit dem die erste Leistungsquelle, ausgeführt als Tretkurbel des Fahrrades, auf das Abtriebselement in zumindest zwei Schaltstufen aufschaltbar ist und vorteilhafterweise eine innerhalb der Nabe neben dem Hauptgetriebe angeordnete zweite Leistungsquelle, ausgeführt als Elektromotor, aufweist. Die zweite Leistungsquelle ist dabei bezogen auf die Getriebemittelachse auf einer der ersten Leistungsquelle gegenüberliegenden Seite angeordnet, siehe beispielsweise Ausführung gemäß Figur 3. Nachteilhafterweise ist jedoch der Elektromotor zur Bildung der zweiten Leistungsquelle mit einem starren Drehmomentverhältnis mit dem Abtriebselement verbunden, das als Radnabe ausgeführt ist, wobei die Aufschaltung des Elektromotors unmittelbar auf die Abtriebswelle erfolgt, und so eine Änderung des Drehzahlverhältnisses des Elektromotors zur Drehzahl des Abtriebs nicht möglich ist.

Die DE 10 2018 131 682 A1 offenbart eine Getriebeeinheit für ein Fahrzeug zur Aufschaltung von zwei Leistungsquellen auf ein Abtriebselement, nämlich einer Tretkurbel und einem Elektromotor auf einen Kettenabtrieb. Die Getriebeeinheit besteht aus zwei Schaltgetrieben, mit denen die erste Leistungsquelle in Form der Tretkurbel auf das Abtriebselement aufgeschaltet wird, und es sind zwei Elektromotoren vorgesehen, die ebenfalls über die selben Summiergetriebe auf das Abtriebselement aufgeschaltet werden. Das Schaltgetriebe weist mehrere Getriebekomponenten auf, vorliegend in der Form von zwei Summiergetrieben und eine über Freiläufe schaltbare Hinterradnabe. Die Getriebeeinheit ist damit dazu eingerichtet, die Leistung von zwei Elektromotoren auf das Abtriebselement aufzuschalten, wobei die Leistungen der Elektromotoren ebenfalls die Schaltgetriebe durchlaufen, sodass sowohl die Leistung der ersten als auch die Leistung der zweiten Leistungsquelle über die Schaltgetriebe auf den Abtrieb geschaltet sind, und die Getriebeeinheit weist keine Getriebekomponenten auf, die nur von der zweiten Leistungsquelle, also den Elektromotoren, genutzt werden, da die Summiergetriebe mit beiden Leistungsquellen leistungsdurchsetzt werden.

Die DE 10 2018 208 382 A1 offenbart eine Getriebeeinheit, die zur Aufschaltung von zwei Leistungsquellen auf ein Abtriebselement ausgebildet ist, nämlich die Leistung von einer Tretkurbel und die Leistung von einem Elektromotor, die auf eine Getriebeausgangswelle aufgeschaltet werden. Die Getriebeeinheit weist zwei Schaltgetriebe in Form von Planetenradsätzen auf, mit dem die erste Leistungsquelle, ausgeführt als Tretkurbel, in zumindest zwei Schaltstufen auf das Abtriebselement aufgeschaltet wird. Das Schaltgetriebe weist eine erste Getriebekomponente und wenigstens eine zweite Getriebekomponente auf, die mittels der Komponenten aus den zwei Planetenradsätzen gebildet sind. Die Getriebeeinheit ist ferner dazu eingerichtet, die Leistung des Elektromotors auf das Abtriebselement aufzuschalten, wobei die Leistung des Elektromotors über ein Verteilergetriebe auf das Abtriebselement aufgeschaltet wird. Die Leistung der Tretkurbel wird dabei ebenfalls über das Verteilergetriebe auf das Abtriebselement geführt, sodass dieses nicht ausschließlich von der Leistung des Elektromotors durchsetzt wird.

Die DE 10 2013 113 524 A1 offenbart eine weitere Getriebeeinheit, die ein Summiergetriebe in Form eines Groß(zahn)rades aufweist, auf das sowohl eine Tretkurbelleistung als auch eine Elektromotorleistung aufgeschaltet wird, sodass kein Verteilergetriebe als Zwischengetriebe zwischen dem Elektromotor und einem Schaltgetriebe eingerichtet ist.

Damit zeigen die obenstehend vorgestellten Getriebeeinheiten keine Ausführung, gemäß der ein Verteilergetriebe als isoliertes Zwischengetriebe zwischen einem Elektromotor und einem Schaltgetriebe der Getriebeeinheit eingerichtet ist, sodass auch kein Verteilergetriebe offenbart ist, das mit der ersten Getriebekomponente des Schaltgetriebes mittels eines ersten Leistungsstranges und mit der zweiten Getriebekomponente des Schaltgetriebes mittels eines zweiten Leistungsstranges wirkverbunden ist, sodass eine Beschaltung des Verteilergetriebes mittels der Getriebekomponenten des Schaltgetriebes ermöglicht wäre.

### OFFENBARUNG DER ERFINDUNG

Aufgabe der Erfindung ist die Verbesserung einer Getriebeeinheit für ein Fahrzeug, insbesondere für ein Fahrrad mit Elektromotor als zweite Leistungsquelle, mit der die Aufschaltung der zweiten Leistungsquelle auf ein Abtriebselement verbessert ermöglicht ist, und mit der die Nachteile des vorstehend genannten Standes der Technik überwunden werden können. Insbesondere soll eine vorteilhafte Aufschaltung der Leistung aus der zweiten Leistungsquelle in das Schaltgetriebe möglich sein, bei der die zweite Leistungsquelle vorteilhaft an der Getriebeeinheit angeordnet und in dieser integriert werden kann. Insbesondere soll eine Änderung des Drehzahlverhältnisses des Elektromotors zur Drehzahl des Abtriebs auf einfache Weise möglich sein.

Diese Aufgabe wird ausgehend von einer Getriebeeinheit gemäß dem Oberbegriff des Anspruches 1 und ausgehend von einer Motor-Getriebebaugruppe gemäß dem Oberbegriff des Anspruches 17 mit den jeweils kennzeichnenden Merkmalen gelöst. Vorteilhafte Weiterbildungen der Erfindung sind in den abhängigen Ansprüchen angegeben.

Die Erfindung schließt die technische Lehre ein, dass ein Verteilergetriebe als ein Zwischenglied zwischen der zweiten Leistungsquelle und dem Schaltgetriebe eingerichtet ist, über das die zweite Leistungsquelle an das Schaltgetriebe angebunden werden kann, wobei das Verteilergetriebe mit der ersten Getriebekomponente des Schaltgetriebes mittels eines ersten Leistungsstranges und mit der zweiten Getriebekomponente des Schaltgetriebes mittels eines zweiten Leistungsstranges wirkverbunden ist, wobei eine Beschaltung des Verteilergetriebes mittels einer Beschaltung der Getriebekomponenten über den ersten und zweiten Leistungsstrang des Schaltgetriebes ermöglicht ist und wobei der Leistungsdurchsatz der ersten Leistungsquelle auf das Abtriebselement nur über das Schaltgetriebe und nicht über das Verteilergetriebe erfolgt.

Kerngedanke der Erfindung ist ein Verteilergetriebe als Bindeglied zwischen der zweiten Leistungsquelle und dem eigentlichen Schaltgetriebe, wobei das Verteilergetriebe zwei Leistungsstränge zum Schaltgetriebe bildet, wobei der erste Leistungsstrang über die erste Getriebekomponente und der zweite Leistungsstrang über die zweite Getriebekomponente mit dem Schaltgetriebe verbunden ist. Die Getriebeeinheit weist insofern das Schaltgetriebe und das Verteilergetriebe als zwei strukturell wesentliche Komponenten auf.

Dadurch, dass das Verteilergetriebe als ein Zwischenglied zwischen der zweiten Leistungsquelle und dem Schaltgetriebe ausgebildet ist, erfolgt der Leistungsdurchsatz von der ersten Leistungsquelle auf das Abtriebselement nur über das Schaltgetriebe und nicht über das Verteilergetriebe. Hingegen erfolgt der Leistungsdurchsatz von der zweiten Leistungsquelle auf das Abtriebselement über das Verteilergetriebe und anschließend über das Schaltgetriebe auf das Abtriebselement.

Wird nun das Schaltgetriebe mit verschiedenen Schaltstufen beschaltet, so folgt auch eine Beschaltung des Verteilergetriebes über die beiden Leistungsstränge, da sich die Drehzahl und damit das Drehzahlverhältnis und folglich auch das Leistungsverhältnis der Getriebekomponenten des Schaltgetriebes bei einer Beschaltung desselben ändern, sodass über die Leistungsstränge die Beschaltung auch auf das Verteilergetriebe in Abhängigkeit der eingelegten Schaltstufe des Schaltgetriebes übertragen wird.

Der Vorteil liegt insbesondere darin, dass dann, wenn das Verteilergetriebe das Drehmoment über die Leistungsstränge in das Schaltgetriebe einleitet, die Drehzahlverhältnisse der Komponenten im Schaltgetriebe die Drehzahlverhältnisse im Verteilergetriebe ebenfalls diktieren. Im Ergebnis ergibt sich, dass die Antriebsleistung der zweiten Leistungsquelle, beispielsweise ausgeführt als Elektromotor, immer in die angetriebene Getriebekomponente des Schaltgetriebes eingeleitet wird. So erfolgt eine gangabhängige Übersetzung der Leistung aus der zweiten Leistungsquelle. Anders ausgedrückt sorgt das Verteilergetriebe dafür, dass die Leistung der zweiten Leistungsquelle abhängig von den Beschaltungszuständen der Getriebekomponenten des Schaltgetriebes auf diese aufgeteilt wird.

Die zweite Leistungsquelle kann direkt oder indirekt mit dem Verteilergetriebe koppelbar sein, wobei der Leistungsfluss von der zweiten Leistungsquelle in das Schaltgetriebe über das Verteilergetriebe erfolgt.

Ein wesentlicher Vorteil entsteht insbesondere dadurch, dass eine erste Schaltklinke zwischen der ersten Leistungsquelle und der ersten Getriebekomponente eingerichtet ist und dass eine zweite Schaltklinke zwischen der ersten Leistungsquelle und der zweiten Getriebekomponente eingerichtet ist, sodass sich eine Aktivierung der ersten Schaltklinke auf den ersten Leistungsstrang und eine Aktivierung der zweiten Schaltklinke auf den zweiten Leistungsstrang auswirkt. Insofern kann mit einer Beschaltung der ersten und der zweiten Getriebekomponente sowohl das Schaltgetriebe als auch das Verteilergetriebe beschaltet werden.

Vorteilhafterweise sind das Schaltgetriebe und das Verteilergetriebe baueinheitlich ausgebildet, und insbesondere weisen das Schaltgetriebe und das Verteilergetriebe eine gemeinsame Getriebemittelachse auf. Die baueinheitliche Ausführung des Schaltgetriebes und des Verteilergetriebes kann zu einer Getriebeeinheit führen, die als Baugruppe einzeln handhabbar und/oder in einem gemeinsamen Gehäuse integrierbar ist. Das Schaltgetriebe und das Verteilergetriebe können konstruktiv bedingt selbsthaltend miteinander verbunden sein und ein gemeinsames Gehäuse aufweisen, das als eine drehstarre Komponente der Getriebeeinheit dient.

Die Getriebeeinheit kann als wesentliches Merkmal einen Eingang für die erste Leistungsquelle, einen Eingang für die zweite Leistungsquelle und das Abtriebselement aufweisen, wobei ferner ein Schaltsystem Bestandteil der Getriebeeinheit ist. Die Getriebeeinheit kann weiterhin zumindest eine drehstarre Komponente aufweisen, insbesondere ein Gehäuse oder zumindest ein Teil eines mit dem Fahrzeug feststehenden Bauteils. Die gemeinsame Getriebemittelachse des Verteilergetriebes und des Schaltgetriebes kann beispielsweise durch einen in einer Achse rotierenden Teil einer Tretkurbel gebildet werden, wobei das Schaltgetriebe und das Verteilergetriebe auch jeweilige Getriebemittelachsen aufweisen können, die beispielsweise parallel verlaufen und insofern einen Abstand zueinander haben. Jedenfalls weist das Schaltgetriebe der Getriebeeinheit eine Getriebemittelachse auf, die insbesondere die Rotationsachse des Abtriebselements bildet.

Entlang der Getriebemittelachse gesehen kann eine erste Schnittstelle für die erste Leistungsquelle auf einer ersten Seite des Schaltgetriebes und eine zweite Schnittstelle für die zweite Leistungsquelle auf einer der ersten Leistungsquelle gegenüberliegenden zweiten Seite des Schaltgetriebes angeordnet sein. Durch das erfindungsgemäß am Schaltgetriebe angeordnete Verteilergetriebe wird der Vorteil erreicht, dass die Leistung der zweiten Leistungsquelle in gewisser Weise auf einer Rückseite in das Schaltgetriebe eingebracht werden kann, welche Rückseite insbesondere aus beispielsweise nur drehend angetriebenen Getriebekomponenten des Schaltgetriebes besteht. In oder an diesen drehenden Getriebekomponenten führt das Verteilergetriebe die Leistung aus der zweiten Leistungsquelle über die beiden Leistungsstränge in das Schaltgetriebe ein, sodass die zweite Leistungsquelle, also beispielsweise der Elektromotor, nicht seitlich mit Bezug auf die Getriebemittelachse oder auch nicht direkt auf der Seite der Anordnung des Abtriebselements an das Schaltgetriebe angebracht werden muss. Durch die Verwendung des Verteilergetriebes wird insbesondere eine bauraumsparende Anordnung der zweiten Leistungsquelle ermöglicht, insbesondere, wenn dieser einen Elektromotor mit einer flachen baulichen Ausführung aufweist, und der Durchmesser des Elektromotors kann beispielsweise dem Durchmesser der Getriebeeinheit entsprechen. So kann ein drehmomentstarker Elektromotor als zweite Leistungsquelle zum Einsatz kommen, der bauraumsparend auf der Seite des Schaltgetriebes angeordnet werden kann, und der mit Bezug auf die Getriebemittelachse gegenüberliegend zur ersten Leistungsquelle und damit gegenüberliegend zum Abtriebselement angeordnet wird.

Die erste Schnittstelle und die zweite Schnittstelle sind so am Schaltgetriebe ausgebildet, dass die Schnittstellen entlang der Getriebemittelachse gesehen, sich gegenüberliegen. So kann entlang der Getriebemittelachse gesehen das Verteilergetriebe auf einer der ersten Schnittstelle für die erste Leistungsquelle gegenüberliegenden zweiten Seite des Schaltgetriebes angeordnet werden und die zweite Schnittstelle aufweisen oder diese selbst bilden. Die zweite Schnittstelle wird insofern von der Rückseite des Schaltgetriebes gebildet oder vorzugsweise vom Verteilergetriebe, das auf der Rückseite des Schaltgetriebes angeordnet ist.

Die Rückseite bildet dabei die Seite, die der Seite der Anordnung des Abtriebselements gegenüberliegt.

Mit anderen Worten ist das Verteilergetriebe räumlich zwischen dem Schaltgetriebe und der zweiten Schnittstelle zur Anbindung der zweiten Leistungsquelle eingerichtet, d.h. im verbauten Zustand zwischen dem Schaltgetriebe und dem Elektromotor. Auf der Seite, auf der das Verteilergetriebe angeordnet ist, befindet sich häufig wenigstens eine drehstarre Komponente, an der Teile der zweiten Leistungsquelle starr angeordnet werden können, also insbesondere der Stator eines Elektromotors. So entsteht der Vorteil der rückseitigen Abstützung der Getriebeeinheit gemeinsam mit Teilen der zweiten Leistungsquelle, und die zweite Leistungsquelle bringt über das Verteilergetriebe rückseitig die Leistung in das Schaltgetriebe ein, wobei vorderseitig die erste Leistungsquelle, insbesondere die Tretkurbel des Fahrrades, die Leistung in das Schaltgetriebe einbringt. Der Abtrieb erfolgt über das Abtriebselement entlang der Getriebemittelachse gesehen zwischen der Anordnung der ersten Leistungsquelle und der Anordnung der zweiten Leistungsquelle, insbesondere zwischen den beiden Schnittstellen für die Anordnung der Leistungsquellen.

Gemäß einer noch weiteren vorteilhaften Ausgestaltung der Getriebeeinheit sind das Schaltgetriebe und/oder das Verteilergetriebe als Umlaufgetriebe und insbesondere als Planetengetriebe oder ineinander verschachtelte Planetengetriebe ausgebildet, und das Schaltgetriebe und/oder das Verteilergetriebe weisen insbesondere eine gemeinsame Getriebemittelachse auf. Das Abtriebselement kann insbesondere als umlaufende Glocke, insbesondere Gehäuseglocke, ausgebildet sein, in der das Schaltgetriebe und insbesondere auch das Verteilergetriebe aufgenommen sind und in der ein Aufnahmeraum zur Aufnahme der zweiten Leistungsquelle, insbesondere ein Elektromotor, eingerichtet ist.

Im Folgenden wird näher auf die Wirkverbindung zwischen dem Verteilergetriebe und dem Schaltgetriebe eingegangen. Kerngedanke der Erfindung ist insbesondere eine vorteilhafte Kopplung des Verteilergetriebes über zumindest zwei Getriebekomponenten mittels zumindest zweier Leistungssträngen an das Schaltgetriebe, sodass eine erste Komponente des Verteilergetriebes mit einer ersten Getriebekomponente des Schaltgetriebes und eine zweite Komponente des Verteilergetriebes mit einer zweiten Getriebekomponente des Schaltgetriebes gekoppelt sind. Weitere Leistungsstränge sind dabei insbesondere möglich.

Erfindungsgemäß sind die Verbindungen der jeweiligen Getriebekomponenten des Verteilergetriebes und des Schaltgetriebes so miteinander ausgeführt, dass eine Beschaltung des Verteilergetriebes mittels der Getriebekomponenten des Schaltgetriebes ermöglicht wird. Weisen beispielsweise die Getriebekomponenten des Schaltgetriebes eine bestimmte Drehzahl zueinander auf, so kann dieses Drehzahlverhältnis auch auf das Drehzahlverhältnis der Komponenten des Verteilergetriebes übertragen werden, wenn die Leistungsstränge insbesondere eine starre Kopplung der Getriebekomponenten aufweisen. Im Ergebnis führt das dazu, dass das Verteilergetriebe mit dem Schaltgetriebe so zusammenwirkt, dass der Drehmomentquotient der Drehmomente der wenigstens zwei Getriebekomponenten des Schaltgetriebes und der Drehmomentquotient der Drehmomente der mit den zwei Getriebekomponenten wirkverbundenen Komponenten des Verteilergetriebes wenigstens ≤ 30 %, bevorzugt ≤ 20 % und weiter bevorzugt ≤ 10 % voneinander abweichen oder insbesondere und am meisten bevorzugt identisch zueinander sind. Dies wird insbesondere erst dadurch ermöglicht, dass mit einer Beschaltung der ersten und der zweiten Getriebekomponente sowohl das Schaltgetriebe als auch das Verteilergetriebe beschaltet werden können, da die beschalteten Getriebekomponenten zugleich Teil des ersten und zweiten Leistungsstranges sind. Der erste Leistungsstrang umfasst dabei die erste Getriebekomponente und der zweite Leistungsstrang umfasst die zweite Getriebekomponente.

Mit weiterem Vorteil kann wenigstens eine Getriebekomponente zumindest einen Freilauf aufweisen bzw. mit diesem eingerichtet sein, wobei der Freilauf insbesondere eingerichtet ist, die Getriebekomponente mit einer drehstarren Komponente und/oder dem Antriebselement in einer Sperrrichtung drehfest zu koppeln. Befinden sich Freiläufe zwischen zwei rotierenden Getriebekomponenten, insbesondere also zwischen dem Abtriebselement und einer Getriebekomponente, so spielen die relativen Drehzahlen der Komponenten zueinander eine entsprechende Rolle, sodass je nach Schaltstufe der Freilauf die beiden Getriebekomponenten drehstarr miteinander verbindet oder in einer Drehrichtung die Drehbewegung gegeneinander freigibt.

Insbesondere kann ein oder können mehrere Freiläufe derart eingerichtet sein, dass wenigstens eine Komponente in wenigstens einer Gangstufe, insbesondere durch einen Freilauf, drehfest mit einer drehstarren Komponente gekoppelt wird, sodass wenigstens ein Leistungsstrang zwischen Verteilergetriebe und Schaltgetriebe keine Leistung überträgt.

Durch die Wirkverbindung der Freiläufe mit den insbesondere beschalteten Getriebekomponenten des Schaltgetriebes, die auch Teil der Leistungsstränge sind, entsteht insofern auch eine Wirkverbindung der Freiläufe mit dem Verteilergetriebe.

Die Anordnung der Leistungsstränge zwischen dem Verteilergetriebe und dem Schaltgetriebe kann auf verschiedene Weise vorgesehen sein.

Insbesondere dann, wenn das Schaltgetriebe zumindest ein oder mehrere Planetengetriebe aufweist, können die Leistungsstränge an die Komponenten der Planetengetriebe direkt angeordnet werden, also an Hohlrad, Sonnenrad und/oder Planetenträger des Schaltgetriebes und des Verteilergetriebes. Weist das Schaltgetriebe beispielsweise ein einziges Planetengetriebe auf, so kann der erste Leistungsstrang des Verteilergetriebes an das Hohlrad des Schaltgetriebes und/oder der zweite Leistungsstrang an das Sonnenrad des Schaltgetriebes angebunden werden, sodass das Hohlrad die erste Getriebekomponente und das Sonnenrad die zweite Getriebekomponente bilden.

Auch und insbesondere das Verteilergetriebe kann ein Planetengetriebe bilden. So ist es gemäß einer weiteren Variante möglich, dass sich der erste Leistungsstrang zwischen einem Hohlrad des Verteilergetriebes und dem Hohlrad des Schaltgetriebes erstreckt und dass der zweite Leistungsstrang sich zwischen einem Sonnenrad des Verteilergetriebes und dem Sonnenrad des Schaltgetriebes erstreckt. Gemäß dieser ersten Variante mit nur einem Planetengetriebe des Schaltgetriebes und einem Planetengetriebe des Verteilergetriebes können die Komponenten des Verteilergetriebes durch die Beschaltung des Schaltgetriebes ebenfalls mitbeschaltet werden.

Weiterhin besteht die Möglichkeit, dass das Schaltgetriebe und/oder das Verteilergetriebe wenigstens zwei insbesondere verschachtelte Planetengetriebe aufweisen. Dabei ist es mit besonderem Vorteil möglich, dass der erste Leistungsstrang des Verteilergetriebes an ein Hohlrad des äußeren Planetengetriebes des Schaltgetriebes und/oder der zweite Leistungsstrang an einen Planetenträger eines inneren Planetengetriebes dieses Schaltgetriebes angebunden sind, sodass das äußere Hohlrad die erste Getriebekomponente und der innere Planetenträger die zweite Getriebekomponente bilden.

Insbesondere kann der erste Leistungsstrang sich zwischen einem Hohlrad eines äußeren Planetengetriebes des Verteilergetriebes und dem äußeren Hohlrad des Schaltgetriebes erstrecken, und/oder der zweite Leistungsstrang kann sich zwischen einem Planetenträger des inneren Planetengetriebes des Verteilergetriebes und dem inneren Planetenträger des Schaltgetriebes erstrecken.

Alternativ zu ineinander verschachtelten Planetengetrieben kann beispielsweise das Verteilergetriebe zwei voreinander angeordnete Planetengetriebe aufweisen, insbesondere in Verlaufsrichtung der Getriebemittelachse gesehen, wobei der erste Leistungsstrang sich zwischen einem Hohlrad eines ersten, motorseitigen Planetengetriebes des Verteilergetriebes und dem äußeren Hohlrad des Schaltgetriebes erstreckt und sich der zweite Leistungsstrang zwischen einem Planetenträger eines zweiten, schaltgetriebeseitigen Planetengetriebes des Verteilergetriebes und dem inneren Planetenträger des Schaltgetriebes erstreckt. Das Verteilergetriebe und/oder das Schaltgetriebe können aber auch als Stirnradgetriebe oder als Kegelradgetriebe ausgebildet sein oder die beiden voreinander liegenden Planetengetriebe des Verteilergetriebes können in Verlaufsrichtung der Getriebemittelachse gesehen auch gegeneinander ausgetauscht angeordnet sein.

Zwischen dem Verteilergetriebe und der zweiten Schnittstelle zur Anbindung der zweiten Leistungsquelle ist mit weiterem Vorteil ein Reduziergetriebe angeordnet, mit dem die Drehzahl der zweiten Leistungsquelle auf das Verteilergetriebe reduzierbar ist. Zwischen der zweiten Leistungsquelle und dem Schaltgetriebe können insofern zunächst das Reduziergetriebe und in Leistungsflussrichtung nachfolgend das Verteilergetriebe angeordnet sein. Das Reduziergetriebe kann insbesondere auch als Planetengetriebe, jedoch auch als Stirnradstufe oder Umlaufgetriebe ausgeführt werden.

Das Schaltgetriebe weist mit weiterem Vorteil ein Schaltsystem mit wenigstens einer Schaltklinke zur Aufschaltung der ersten Leistungsquelle auf die erste Getriebekomponente und/oder die zweite Getriebekomponente des Schaltgetriebes auf. Die wenigstens eine Schaltklinke kann allgemein als Schaltelement ausgeführt sein und beispielsweise auch eine Kupplung bilden oder umfassen. Es können das Schaltgetriebe und/oder das Verteilergetriebe wenigstens einen Freilauf gegen eine drehstarre Komponente aufweisen. Ferner kann das Schaltgetriebe einen Freilauf zum oder gegen die erste Leistungsquelle aufweisen.

Die Aufgabe der Erfindung wird weiterhin gelöst durch eine Motor-Getriebebaugruppe mit einer Getriebeeinheit wie vorstehend ausgeführt, insbesondere als Antriebseinheit für ein Fahrrad, aufweisend eine zweite Leistungsquelle in Form eines Elektromotors, der mittels des Verteilergetriebes mit dem Schaltgetriebe wirkverbunden ist. Die Motor-Getriebebaugruppe mit der Getriebeeinheit und dem Elektromotor kann insbesondere eine gemeinsame bauliche Einheit bilden, die insbesondere am Fahrrad, beispielsweise im Bereich der Tretkurbel und insbesondere im Bereich der Hinterradnabe anordbar oder integrierbar ist.

### BEVORZUGTES AUSFÜHRUNGSBEISPIEL DER ERFINDUNG

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Figur 1: eine schematische Ansicht eines ersten Ausführungsbeispiels der erfindungsgemäßen Getriebeeinheit mit einer ersten und einer zweiten Leistungsquelle, wobei die zweite Leistungsquelle in Form eines Elektromotors ausgeführt ist, und sodass die Darstellung eine Motor-Getriebeeinheit zeigt,
- Figur 2: eine Motor-Getriebeeinheit mit einem Verteilergetriebe und einem Schaltgetriebe, jeweils ausgeführt mit zwei ineinander verschachtelten Planetengetrieben,
- Figur 3: ein Ausführungsbeispiel einer Motor-Getriebeeinheit mit einem Schaltgetriebe, aufweisend zwei ineinander verschachtelte Planetengetriebe und aufweisend ein Verteilergetriebe aus zwei voreinander angeordneten Planetengetrieben zur Anbindung der zweiten Leistungsquelle in Form eines Elektromotors und
- Figur 4: das Ausführungsbeispiel gemäß Figur 3 mit einem Reduziergetriebe zwischen der zweiten Leistungsquelle, beispielsweise einem Elektromotor, und dem Verteilergetriebe.

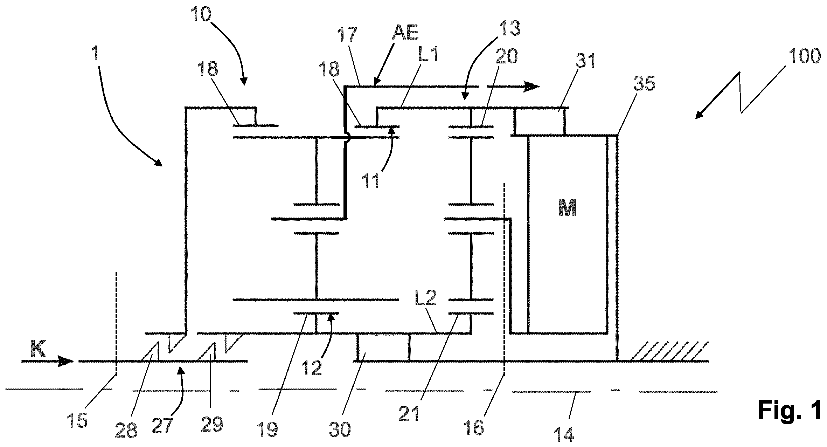

Figur 1 zeigt ein erstes Ausführungsbeispiel der erfindungsgemäßen Getriebeeinheit 1 in baulicher Verbindung mit der zweiten Leistungsquelle M, die beispielsweise ausgeführt ist als Elektromotor. Insofern bildet die Getriebeeinheit 1 mit der zweiten Leistungsquelle M eine Motor-Getriebebaugruppe 100, wie diese beispielsweise als Tretkurbel oder in Verbindung mit der Tretkurbel in ein Fahrrad eingebaut werden kann. Um zugleich als Tretkurbel für ein Fahrrad dienen zu können, weist die Getriebeeinheit 1 eine erste Schnittstellt 15 auf, an der eine erste Leistungsquelle K angebracht werden kann, wobei die erste Leistungsquelle K die Tretkurbel des Fahrrades betreffen kann. Die zweite Leistungsquelle M in Form eines Elektromotors wird über eine zweite Schnittstelle 16 der Getriebeeinheit 1 zugeordnet.

Die Getriebeeinheit 1 weist ein Abtriebselement AE auf, und das Abtriebselement AE kann als Welle oder, wie im Beispiel schematisch gezeigt, als Glocke ausgeführt sein, die beispielsweise auch zugleich ein Gehäuse für die Getriebeeinheit 1 bilden kann, insbesondere damit auch für die zweite Leistungsquelle M als integrativer Bestandteil. An einem so ausgeführten Abtriebselement AE kann dann ein Kettenblatt für eine Kette des Fahrrades oder eine Riemenscheibe für einen Riemen angebracht werden. Wird die Motor-Getriebebaugruppe 100 beispielsweise als Nabengetriebe ausgeführt, so können an dem glockenartigen Abtriebselement AE beispielsweise die Speichen des angetriebenen Rades des Fahrrades angebracht werden.

Die Getriebeeinheit 1 weist als Herzstück ein Schaltgetriebe 10 auf, das ein Planetengetriebe umfasst. Erfindungsgemäß ist dem Schaltgetriebe 10 ein Verteilergetriebe 13 zugeordnet, das ebenfalls ein Planetengetriebe bildet, und das Verteilergetriebe 13 dient als Zwischenglied zwischen der zweiten Leistungsquelle M, die über die zweite Schnittstelle 16 an das Verteilergetriebe 13 angebracht ist, und dem Schaltgetriebe 10.

Das Ausführungsbeispiel zeigt das Schaltgetriebe 10 mit einer ersten Getriebekomponente 11 in Form eines Hohlrades 18 des Schaltgetriebes 10, und mit einer zweiten Getriebekomponente 12 in Form eines Sonnenrades 19 des Schaltgetriebes 10. Das Verteilergetriebe 13 ist an genau diese beiden Getriebekomponenten 11 und 12 angekoppelt, sodass ein erster Leistungsstrang L1 mit dem Hohlrad 18 und ein zweiter Leistungsstrang L2 mit dem Sonnenrad 19 des Schaltgetriebes 10 verbunden ist. So weist das Verteilergetriebe 13 in Verbindung mit dem Schaltgetriebe 10 beispielhaft zwei Leistungsstränge L1 und L2 auf, wobei auch mehr als zwei Leistungsstränge L1, L2 ... Lx denkbar sind. So wird erreicht, dass eine Beschaltung des Verteilergetriebes mittels der Getriebekomponenten 11 und 12 des Schaltgetriebes 10 ermöglicht wird.

Das Schaltgetriebe 10 und das Verteilergetriebe 13 sind gemeinsam baueinheitlich ausgeführt und erstrecken sich um eine gemeinsame Getriebemittelachse 14 herum. Die Getriebemittelachse 14 bildet dabei zugleich die Kurbelachse oder eine parallele Achse einer Tretkurbel oder die Rotationsachse eines angetriebenen Rades eines Fahrzeugs oder eine zu dieser parallele Achse, wenn die Motor- Getriebebaugruppe 100 ein Nabengetriebe bildet. Die erste Leistungsquelle K repräsentiert damit die Tretkurbel oder eine mit dieser angetrieben Achse, und die über die erste Schnittstelle 15 mit Schaltklinken 28, 29 eines Schaltsystems 27 zusammenwirkt, die insbesondere mit der Rotation der Tretkurbel mitrotieren. Die Schaltklinke 28 wirkt mit dem Hohlrad 18 des Schaltgetriebes 10 zusammen, wobei das Hohlrad 18 geteilt ausgeführt ist und das Abtriebselement AE wird zwischen den beiden Teilen des Hohlrades 18 des Schaltgetriebes 10 nach radial außen hindurchgeführt. Das Abtriebselement AE ist dabei mit dem Planetenträger des Schaltgetriebes 10 verbunden. Das Sonnenrad 19 des Schaltgetriebes ist hingegen mit der ersten Leistungsquelle K mittels der Schaltklinke 29 wirkverbunden.

Zwischen einer drehstarren Komponente 35 und dem Sonnenrad 19 des Schaltgetriebes 10, das auch verbunden ist mit dem Sonnenrad 21 des Verteilergetriebes 13, ist ein Freilauf 30 eingerichtet, das die beiden Sonnenräder 19, 21 gegen die drehstarre Komponente 35 in einer Drehrichtung abstützt. Das Hohlrad 18 des Schaltgetriebes ist verbunden mit dem Hohlrad 20 des Verteilergetriebes 13, und die Hohlräder 18, 20 sind mit einem weiteren Freilauf 31 gegen die drehstarre Komponente 35 abgestützt. Die zweite Leistungsquelle M treibt dabei den Planetenträger des Verteilergetriebes 13 an. Zwischen dem äußeren Planetengetriebe und dem inneren Planetengetriebe ist ein Zwischenrad 40 beim Schaltgetriebe 10 und ein Zwischenrad 41 beim Verteilergetriebe 13 eingebracht.

Da die erste Schaltklinke 28 zwischen der ersten Leistungsquelle K und der ersten Getriebekomponente 11 eingerichtet ist und da die zweite Schaltklinke 29 zwischen der ersten Leistungsquelle K und der zweiten Getriebekomponente 11 eingerichtet ist, wird eine Aktivierung der ersten Schaltklinke 28 auf den ersten Leistungsstrang L1 und eine Aktivierung der zweiten Schaltklinke 29 auf den zweiten Leistungsstrang L2 und insofern auch auf das Verteilergetriebe 13.

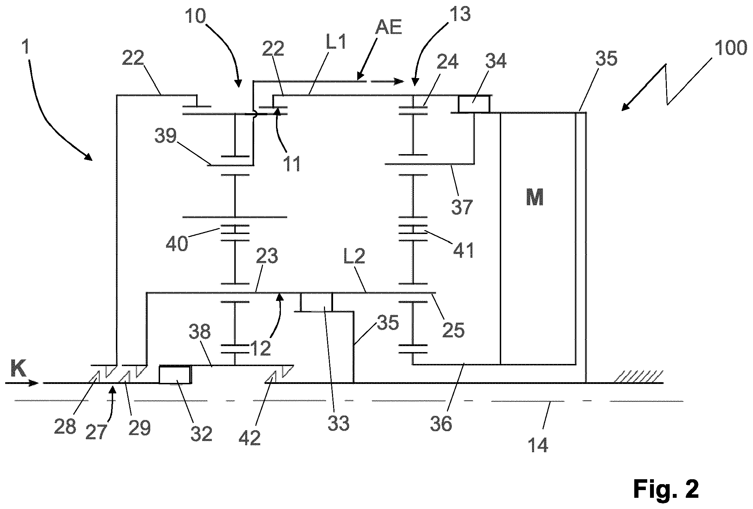

Die Figuren 2 und 3 zeigen weitere Ausführungsformen einer Motor-Getriebebaugruppe 100, wobei im Wesentlichen der Unterschied zur Ausführung gemäß Figur 1 darin besteht, dass das Schaltgetriebe 10 und das Verteilergetriebe 13 aus jeweils zwei Planetengetrieben aufgebaut sind. Figur 2 zeigt dabei zwei ineinander verschachtelte Planetengetriebe, während das Verteilergetriebe 13 gemäß Figur 3 zwei axial in Verlaufsrichtung der Getriebemittelachse 14 gesehen voreinander angeordnete Planetengetriebe aufweist. Das Schaltgetriebe 10 weist in beiden Ausführungsbeispielen gleichermaßen zwei ineinander verschachtelte Planetengetriebe auf.

Der erste Leistungsstrang L1 zwischen den Verteilergetriebe 13 und dem Schaltgetriebe 10 erstreckt sich gemäß Figur 2 zwischen dem Hohlrad 24 des äußeren Planetengetriebes des Verteilergetriebes 13 und dem äußeren Hohlrad 22 des Schaltgetriebes. Der zweite Leistungsstrang L2 erstreckt sich zwischen dem Planetenträger 25 des inneren Planetengetriebes des Verteilergetriebes und dem inneren Planetenträger 23 des Schaltgetriebes 10.

Die zweite Leistungsquelle M in Form eines Elektromotors wirkt auf ein Sonnenrad 36 des inneren Planetengetriebes des Verteilergetriebes 13, während der ruhende Teil der zweiten Leistungsquelle M gegen eine drehstarre Komponente 35 abgestützt ist. Zudem ist der Planetenträger 37 des äußeren Planetengetriebes des Verteilergetriebes 13 ebenfalls gegen die drehstarre Komponente 35 abgestützt.

Das Ausführungsbeispiel zeigt die Verwendung von drei Freiläufen 32, 33 und 34, und der erste Freilauf 32 befindet sich zwischen der ersten Leistungsquelle K und einem Sonnenrad 38 des inneren Planetengetriebes des Schaltgetriebes 10. Der zweite Freilauf 33 befindet sich zwischen einer drehstarren Komponente 35 und dem inneren Planetenträger 25 des Verteilergetriebes 13. Der dritte Freilauf 34 ist eingerichtet zwischen der drehstarren Komponente 35 und dem äußeren Hohlrad 24 des Verteilergetriebes 13.

Das Abtriebselement AE verläuft zwischen dem geteilten äußeren Hohlrad 22 des Schaltgetriebes 10 radial nach außen und ist mit dem Planetenträger 39 des äußeren Planetengetriebes des Schaltgetriebes 10 gekoppelt bzw. durch diesen gebildet.

Durch die ineinander verschachtelte Anordnung der Planetengetriebe für das Schaltgetriebe 10 und für das Verteilergetriebe 13 weisen diese Zwischenräder 40 und 41 auf, die insofern das Hohlrad des inneren Planetengetriebes als auch das Sonnenrad des äußeren Planetengetriebes bilden.

Eine erste Schaltklinke 28 des Schaltsystems 27 ist zwischen der ersten Leistungsquelle K und dem äußeren Hohlrad 22 des Schaltgetriebes 10 angeordnet, und die weitere Schaltklinke 29 des Schaltsystems 27 ist zwischen der ersten Leistungsquelle K und dem inneren Planetenträger 23 des inneren Planetengetriebes des Schaltgetriebes 10 ausgebildet. Eine weitere Schaltklinke 42 wirkt zwischen der drehstarren Komponente 35 und dem Sonnenrad 38 des inneren Planetengetriebes des Schaltgetriebes 10.

In Figur 3 sind die Bestandteile der Motor-Getriebebaugruppe 100 mit denselben Bezugszeichen wie auch in Figur 2 versehen, wobei im Unterschied zur Ausgestaltung gemäß Figur 2 das Verteilergetriebe 13 zwei voreinander angeordnete Planetengetriebe aufweist. Das motornahe erste Planetengetriebe weist den Planetenträger 37 auf, der ein Planetenrad zwischen dem äußeren Hohlrad 24 und dem Zwischenrad 41 führt. Das zweite Planetengetriebe weist einen Planetenträger 25 auf, der ein Planetenrad zwischen dem Sonnenrad 36 und dem Zwischenrad 41 führt. Die inneren und äußeren Planetenträger 25 und 37 sind hier insofern hier nur vordere und hintere Planetenträger.

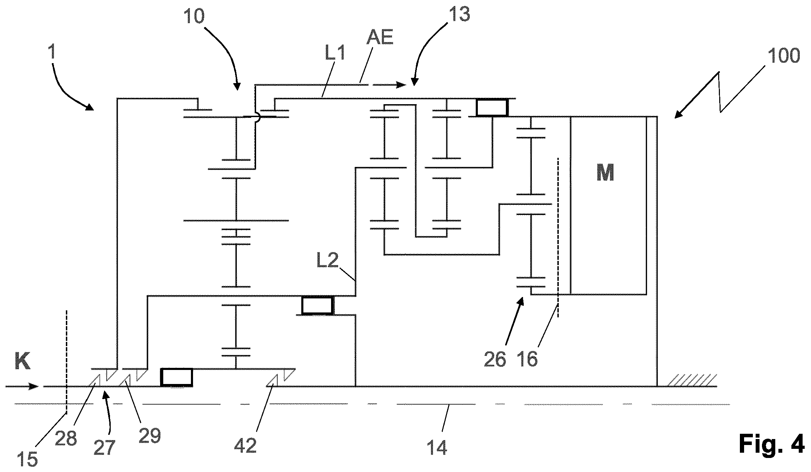

Figur 4 zeigt das Ausführungsbeispiel der Motor-Getriebebaugruppe 100, wobei zwischen der zweiten Leistungsquelle M und dem Verteilergetriebe 13 ein Reduziergetriebe 26 in Ausgestaltung eines Planetengetriebes angeordnet ist. Die zweite Schnittstelle 16 zur zweiten Leistungsquelle M hin wird insofern außenseitig am Reduziergetriebe 26 gebildet. Die weiteren Bezugszeichen zeigen die wesentlichen Komponenten des Schaltgetriebes 10 und des Verteilergetriebes 13, wobei auch hier die Erklärungen aus den Figuren 3 und 4 gleichbedeutend sind und keiner Wiederholung bedürfen.

### Bezugszeichenliste:

- 1: Getriebeeinheit

- 10: Schaltgetriebe
- 11: erste Getriebekomponente
- 12: zweite Getriebekomponente
- 13: Verteilergetriebe
- 14: Getriebemittelachse
- 15: erste Schnittstelle
- 16: zweite Schnittstelle
- 17: Glocke
- 18: Hohlrad des Schaltgetriebes
- 19: Sonnenrad des Schaltgetriebes
- 20: Hohlrad des Verteilergetriebes
- 21: Sonnenrad des Verteilergetriebes
- 22: äußeres Hohlrad des Schaltgetriebes
- 23: innerer Planetenträger des Schaltgetriebes
- 24: äußeres Hohlrad des Verteilergetriebes
- 25: innerer Planetenträger des Verteilergetriebes
- 26: Reduziergetriebe
- 27: Schaltsystem
- 28: erste Schaltklinke
- 29: zweite Schaltklinke
- 30: Freilauf
- 31: Freilauf
- 32: Freilauf
- 33: Freilauf
- 34: Freilauf
- 35: drehstarre Komponente
- 36: Sonnenrad
- 37: Planetenträger
- 38: Sonnenrad
- 39: Planetenträger
- 40: Zwischenrad
- 41: Zwischenrad
- 42: Schaltklinke

- 100: Motor- Getriebebaugruppe

- AE: Abtriebselement
- K: erste Leistungsquelle
- M: zweite Leistungsquelle
- L1: erster Leistungsstrang
- L2: zweiter Leistungsstrang

## Patentansprüche

1. Getriebeeinheit (1) für ein Fahrzeug, insbesondere Fahrrad, zur Aufschaltung von zwei Leistungsquellen (K, M) auf ein Abtriebselement (AE), aufweisend ein Schaltgetriebe (10), mit dem die erste Leistungsquelle (K), insbesondere ausgeführt als Tretkurbel des Fahrrades, in zumindest zwei Schaltstufen auf das Abtriebselement (AE) aufschaltbar ist, wobei das Schaltgetriebe (10) eine erste Getriebekomponente (11) und wenigstens eine zweite Getriebekomponente (12) aufweist,
**dadurch gekennzeichnet,**
**dass** ein Verteilergetriebe (13) als ein Zwischenglied zwischen der zweiten Leistungsquelle (M) und dem Schaltgetriebe (10) eingerichtet ist, über das die zweite Leistungsquelle (M) an das Schaltgetriebe (10) anbindbar ist, wobei das Verteilergetriebe (13) mit der ersten Getriebekomponente (11) des Schaltgetriebes (10) mittels eines ersten Leistungsstranges (L1) und mit der zweiten Getriebekomponente (12) des Schaltgetriebes (10) mittels eines zweiten Leistungsstranges (L2) wirkverbunden ist, wobei eine Beschaltung des Verteilergetriebes (13) mittels einer Beschaltung der Getriebekomponenten (11, 12) über den ersten und zweiten Leistungsstrang (L1, L2) des Schaltgetriebes (10) ermöglicht ist, und wobei der Leistungsdurchsatz der ersten Leistungsquelle (K) auf das Abtriebselement (AE) nur über das Schaltgetriebe (10) und nicht über das Verteilergetriebe (13) erfolgt.

2. Getriebeeinheit (1) nach Anspruch 1,
**dadurch gekennzeichnet,**
**dass** eine erste Schaltklinke (28) zwischen der ersten Leistungsquelle (K) und der ersten Getriebekomponente (11) eingerichtet ist und dass eine zweite Schaltklinke (29) zwischen der ersten Leistungsquelle (K) und der zweiten Getriebekomponente (11) eingerichtet ist, sodass eine Aktivierung der ersten Schaltklinke (28) auf den ersten Leistungsstrang (L1) und eine Aktivierung der zweiten Schaltklinke (29) auf den zweiten Leistungsstrang (L2) wirkt.

3. Getriebeeinheit (1) nach Anspruch 1 oder 2,
**dadurch gekennzeichnet,**
**dass** das Schaltgetriebe (10) und das Verteilergetriebe (13) baueinheitlich ausgebildet sind und/oder wenigstens eine gemeinsame Getriebemittelachse (14) aufweisen und/oder entlang der Getriebemittelachse (14) gesehen eine erste Schnittstelle (15) für die erste Leistungsquelle (K) auf einer ersten Seite des Schaltgetriebes (10) und eine zweite Schnittstelle (16) für die zweite Leistungsquelle (M) auf einer der ersten Leistungsquelle (K) gegenüberliegenden zweiten Seite des Schaltgetriebes (10) angeordnet ist.

4. Getriebeeinheit (1) nach Anspruch 2 oder 3,
**dadurch gekennzeichnet,**
**dass** entlang der Getriebemittelachse (14) gesehen das Verteilergetriebe (13) auf einer der ersten Schnittstelle (15) für die erste Leistungsquelle (K) gegenüberliegenden zweiten Seite des Schaltgetriebes (10) angeordnet ist und die zweite Schnittstelle (16) aufweist.

5. Getriebeeinheit (1) nach einem der Ansprüche 2 bis 4,
**dadurch gekennzeichnet,**
**dass** räumlich zwischen dem Schaltgetriebe (10) und der zweiten Schnittstelle (16) zur Anbindung der zweiten Leistungsquelle (M) das Verteilergetriebe (13) eingerichtet ist.

6. Getriebeeinheit (1) nach einem der vorgenannten Ansprüche,
**dadurch gekennzeichnet,**
**dass** das Schaltgetriebe (10) und/oder das Verteilergetriebe (13) als Umlaufgetriebe und/oder als Planetengetriebe ausgebildet ist und und/oder eine gemeinsame Getriebemittelachse (14) aufweisen und/oder wobei das Abtriebselement (AE) eine umlaufende Glocke (17) bildet, in der das Schaltgetriebe (10) und/oder das Verteilergetriebe (13) aufgenommen sind und/oder in der ein Aufnahmeraum zur Aufnahme der zweiten Leistungsquelle (M) eingerichtet ist.

7. Getriebeeinheit (1) nach einem der vorgenannten Ansprüche,
**dadurch gekennzeichnet,**
**dass** das Verteilergetriebe (13) mit dem Schaltgetriebe (10) so zusammenwirkt, dass
- der Drehmomentquotient der Drehmomente der wenigstens zwei Getriebekomponenten (11,12) des Schaltgetriebes (10) und
- der Drehmomentquotient der Drehmomente der mit den zwei Getriebekomponenten (11,12) wirkverbundenen Komponenten des Verteilergetriebes (13)
- weniger als 30%, und/oder weniger als 20% und und/oder weniger als 10% voneinander abweichen oder identisch zueinander sind.

8. Getriebeeinheit (1) nach einem der vorgenannten Ansprüche,
**dadurch gekennzeichnet,**
**dass** wenigstens eine Getriebekomponente (11,12) wenigstens einen Freilauf (30, 31, 32, 33, 34) aufweist und/oder wobei der Freilauf (30, 31, 32, 33, 34) eingerichtet ist, die Getriebekomponente (11, 12) mit einer drehstarren Komponente (35) und/oder dem Abtriebselement (AE) und/oder der ersten Leistungsquelle (K) und/oder der zweiten Leistungsquelle (M) drehfest zu koppeln.

9. Getriebeeinheit (1) nach Anspruch 8,
**dadurch gekennzeichnet,**
**dass** der Freilauf (30, 31, 32, 33, 34) derart eingerichtet ist, dass wenigstens eine Komponente (11,12) in wenigstens einer Gangstufe und/oder durch einen Freilauf (30, 31, 32, 33, 34) drehfest mit einer drehfesten Komponente (35) gekoppelt ist, sodass wenigstens ein Leistungsstrang (L1, L2) zwischen Verteilergetriebe (13) und Schaltgetriebe (10) keine Leistung überträgt.

10. Getriebeeinheit (1) nach einem der vorgenannten Ansprüche,
**dadurch gekennzeichnet,**
**dass** der erste Leistungsstrang (L1) des Verteilergetriebes (13) an ein Hohlrad (18) des Schaltgetriebes (10) und/oder der zweite Leistungsstrang (L2) an ein Sonnenrad (19) des Schaltgetriebes (10) angebunden sind, sodass das Hohlrad (18) die erste Getriebekomponente (11) und das Sonnenrad (19) die zweite Getriebekomponente (12) bilden.
(FIG. 1)

11. Getriebeeinheit (1) nach Anspruch 10,
**dadurch gekennzeichnet,**
**dass** sich der erste Leistungsstrang (L1) zwischen einem Hohlrad (20) des Verteilergetriebes (13) und dem Hohlrad (18) des Schaltgetriebes (10) erstreckt und dass der zweite Leistungsstrang (L2) sich zwischen einem Sonnenrad (21) des Verteilergetriebes (13) und dem Sonnenrad (19) des Schaltgetriebes (10) erstreckt.
(FIG. 1)

12. Getriebeeinheit (1) nach einem der Ansprüche 1 bis 9,
**dadurch gekennzeichnet,**
**dass** das Schaltgetriebe (10) und/oder das Verteilergetriebe (13) wenigstens zwei Planetengetriebe aufweisen, wobei
- der erste Leistungsstrang (L1) des Verteilergetriebes (13) an ein Hohlrad (22) eines äußeren Planetengetriebes des Schaltgetriebes (10) und/oder der zweite Leistungsstrang (L2) an einen Planetenträger (23) eines inneren Planetengetriebes des Schaltgetriebes (10) angebunden sind, sodass das äußere Hohlrad (22) die erste Getriebekomponente (11) und der innere Planetenträger (23) die zweite Getriebekomponente (12) bilden. (FIG. 2)

13. Getriebeeinheit (1) nach Anspruch 12,
**dadurch gekennzeichnet,**
**dass** der erste Leistungsstrang (L1) sich zwischen einem Hohlrad (24) eines äußeren Planetengetriebes des Verteilergetriebes (13) und dem äußeren Hohlrad (22) des Schaltgetriebes (10) erstreckt und dass der zweite Leistungsstrang (L2) sich zwischen einem Planetenträger (25) des inneren Planetengetriebes des Verteilergetriebes (13) und dem inneren Planetenträger (23) des Schaltgetriebes (10) erstreckt. (FIG. 2)

14. Getriebeeinheit (1) nach einem der Ansprüche 1 bis 9,
**dadurch gekennzeichnet,**
**dass** das Verteilergetriebe (13) zwei voreinander angeordnete Planetengetriebe aufweist, wobei der erste Leistungsstrang (L1) sich zwischen einem Hohlrad (24) eines ersten Planetengetriebes des Verteilergetriebes (13) und dem äußeren Hohlrad (22) des Schaltgetriebes (10) erstreckt und dass der zweite Leistungsstrang (L2) sich zwischen einem Planetenträger (25) eines zweiten Planetengetriebes des Verteilergetriebes (13) und dem inneren Planetenträger (23) des Schaltgetriebes (10) erstreckt.

15. Motor-Getriebebaugruppe (100) mit einer Getriebeeinheit (1) nach einem der vorgenannten Ansprüche, insbesondere ausgeführt als Antriebseinheit für ein Fahrrad, aufweisend eine zweite Leistungsquelle (M) in Form eines Elektromotors, der mittels des als ein Zwischenglied zwischen der zweiten Leistungsquelle (M) und dem Schaltgetriebe (10) eingerichteten Verteilergetriebes (13) mit dem Schaltgetriebe (10) wirkverbunden ist.

## Claims

1. Transmission unit (1) for a vehicle, in particular a bicycle, for connecting two power sources (K, M) to an output element (AE), comprising a gearbox (10) by means of which the first power source (K), in particular designed as the bicycle's pedal crank, can be engaged with the output element (AE) in at least two gear ratios, wherein the gearshift mechanism (10) comprises a first gear component (11) and at least one second gear component (12),
**characterised in that**
a transfer gearbox (13) is arranged as an intermediate element between the second power source (M) and the gearbox (10), via which the second power source (M) can be connected to the gearbox (10), wherein the transfer gearbox (13) is operatively connected to the first gearbox component (11) of the gearbox (10) via a first power train (L1) and to the second gearbox component (12) of the shiftable gearbox (10) via a second power train (L2), whereby engagement of the transfer gearbox (13) is enabled by engaging the gearbox components (11, 12) via the first and second power trains (L1, L2) of the manual gearbox (10), and wherein the power output from the first power source (K) to the output element (AE) takes place only via the shiftable gearbox (10) and not via the transfer gearbox (13).

2. Transmission unit (1) according to claim 1,
**characterised in that**
a first shift pawl (28) is arranged between the first power source (K) and the first gearbox component (11), and **in that** a second shift pawl (29) is arranged between the first power source (K) and the second gearbox component (11), such that activation of the first shift pawl (28) acts on the first power train (L1) and activation of the second shift pawl (29) acts on the second power train (L2).

3. Transmission unit (1) according to claim 1 or 2,
**characterised in that**
the shiftable gearbox (10) and the transfer gearbox (13) are constructed as a single unit and/or have at least one common central gearbox axis (14) and/or, viewed along the central gearbox axis (14), a first interface (15) for the first power source (K) is arranged on a first side of the shiftable gearbox (10) and a second interface (16) for the second power source (M) on a second side of the shiftable gearbox (10) opposite the first power source (K).

4. Transmission unit (1) according to claim 2 or 3,
**characterised in that**
viewed along the central gearbox axis (14) of the transmission, the transfer gearbox (13) is arranged on a second side of the shiftable gearbox (10) opposite the first interface (15) for the first power source (K) and comprises the second interface (16).

5. Transmission unit (1) according to any one of claims 2 to 4,
**characterised in that**
the transfer gearbox (13) is arranged spatially between the shiftable gearbox (10) and the second interface (16) for connecting the second power source (M).

6. Transmission unit (1) according to one of the aforementioned claims, **characterised in that**
the shiftable gearbox (10) and/or the transfer gearbox (13) is designed as an epicyclic gearbox and/or a planetary gearbox and and/or has a common central gearbox axis (14) and/or wherein the output element (AE) forms a rotating bell (17) in which the shiftable gearbox (10) and/or the transfer gearbox (13) are housed and/or in which a housing chamber is provided for accommodating the second power source (M).

7. Transmission unit (1) according to one of the aforementioned claims, **characterised in that**
the transfer gearbox (13) interacts with the shiftable gearbox (10) in such a way that
- the torque ratio of the torques of the at least two gearbox components (11, 12) of the shiftable gearbox (10) and
- the torque ratio of the torques of the components of the transfer gearbox (13) operatively connected to the two gearbox components (11, 12)
- differ by less than 30 per cent, and/or less than 20 per cent, and/or less than 10 per cent from one another or are identical to one another.

8. A transmission unit (1) according to any one of the preceding claims, **characterised in that**
at least one gearbox component (11, 12) comprises at least one freewheel (30, 31, 32, 33, 34) and/or wherein the freewheel (30, 31, 32, 33, 34) is configured to couple the gearbox component (11, 12) in a rotationally fixed manner to a rotationally rotationally rigid component (35) and/or the output element (AE) and/or the first power source (K) and/or the second power source (M).

9. Transmission unit (1) according to claim 8,
**characterised in that**
the freewheel (30, 31, 32, 33, 34) is arranged such that at least one component (11, 12) is rotationally locked to a rotationally rigid component (35) in at least one gear stage and/or via a freewheel (30, 31, 32, 33, 34) is rotationally locked to a rotationally fixed component (35), so that at least one power train (L1, L2) between the transfer gearbox (13) and the shiftable gearbox (10) does not transmit any power.

10. A transmission unit (1) according to one of the preceding claims,
**characterised in that**
the first power train (L1) of the transfer gearbox (13) is connected to a ring gear (18) of the shiftable gearbox (10) and/or the second power train (L2) is connected to a sun gear (19) of the shiftable gearbox (10), such that the ring gear (18) forms the first gearbox component (11) and the sun gear (19) form the second gearbox component (12).

11. Transmission unit (1) according to claim 10,
**characterised in that**,
the first power train (L1) extends between a ring gear (20) of the transfer gearbox (13) and the ring gear (18) of the shiftable gearbox (10), and that the second power train (L2) extends between a sun gear (21) of the transfer gearbox (13) and the sun gear (19) of the shiftable gearbox (10).

12. Transmission unit (1) according to any one of claims 1 to 9,
**characterised in that**
the shiftable gearbox (10) and/or the transfer gearbox (13) comprise at least two planetary gear sets, wherein
- the first power train (L1) of the transfer gearbox (13) is connected to a ring gear (22) of an outer planetary gear set of the shiftable gearbox (10) and/or the second power train (L2) is connected to a planet carrier (23) of an inner planetary gear set of the shiftable gearbox (10), such that the outer ring gear (22) forms the first gearbox component (11) and the inner planet carrier (23) forms the second gearbox component (12).

13. Transmission unit (1) according to claim 12,
**characterised in that**
the first power train (L1) extends between a ring gear (24) of an outer planetary gear set of the transfer gearbox (13) and the outer ring gear (22) of the shiftable gearbox (10), and that the second power train (L2) extends between a planet carrier (25) of the inner planetary gear train of the transfer gearbox (13) and the inner planet carrier (23) of the shiftable gearbox (10).

14. Transmission unit (1) according to any one of claims 1 to 9,
**characterised in that**
the transfer gearbox (13) comprises two planetary gear sets arranged one in front of the other, wherein the first power train (L1) extends between a ring gear (24) of a first planetary gear set of the transfer gearbox (13) and the outer ring gear (22) of the shiftable gearbox (10), and **in that** the second power train (L2) extends between a planet carrier (25) of a second planetary gear set of the transfer gearbox (13) and the inner planet carrier (23) of the shiftable gearbox (10).

15. Motor-transmission assembly (100) comprising a transmission unit (1) according to one of the aforementioned claims, in particular designed as a drive unit for a bicycle, comprising a second power source (M) in the form of an electric motor, which is operatively connected to the manual gearbox (10) by means of the transfer gearbox (13) arranged as an intermediate link between the second power source (M) and the shiftable gearbox (10).

## Revendications

1. Unité de transmission (1) pour un véhicule, en particulier un vélo, destinée à coupler deux sources de puissance (K, M) à un élément de sortie (AE), comprenant une boîte de vitesses (10) permettant de coupler la première source de puissance (K), notamment conçue comme une manivelle de pédalier du vélo, peut être couplée à l'élément de sortie (AE) dans au moins deux rapports, la boîte de vitesses (10) comportant un premier composant de transmission (11) et au moins un deuxième composant de transmission (12),
**caractérisé en ce**
**qu'**un boîtier de transfert (13) est agencé en tant qu'élément intermédiaire entre la deuxième source de puissance (M) et la boîte de vitesses (10), par l'intermédiaire duquel la deuxième source de puissance (M) peut être reliée à la boîte de vitesses (10), le boîtier de transfert (13) étant relié fonctionnellement au premier composant de transmission (11) de la boîte de vitesses (10) au moyen d'un premier circuit de transmission (L1) et au deuxième composant de transmission (12) de la boîte de vitesses manuelle (10) au moyen d'un deuxième circuit de transmission (L2), la commutation de la boîte de transfert (13) étant rendue possible par la commutation des composants de transmission (11, 12) via les premier et deuxième circuits de transmission (L1, L2) de la boîte de vitesses manuelle (10) est possible, et dans laquelle la transmission de puissance de la première source de puissance (K) vers l'élément de sortie (AE) s'effectue uniquement par l'intermédiaire de la boîte de vitesses manuelle (10) et non par l'intermédiaire de la boîte de transfert (13).

2. Unité de transmission (1) selon la revendication 1,
**caractérisée en ce**
**qu'**un premier cliquet (28) est disposé entre la première source de puissance (K) et le premier composant de transmission (11) et en ce qu'un deuxième cliquet (29) est disposé entre la première source de puissance (K) et le deuxième composant de transmission (11), de sorte qu'une activation du premier cliquet de commutation (28) agit sur la première ligne de puissance (L1) et qu'une activation du deuxième cliquet de commutation (29) agit sur la deuxième ligne de puissance (L2).

3. Unité de transmission (1) selon la revendication 1 ou 2,
**caractérisée en ce**
**que** la boîte de vitesses (10) et la boîte de transfert (13) sont réalisées sous la forme d'une unité structurelle et/ou présentent au moins un axe central de transmission commun (14) et/ou, vu le long de l'axe central de transmission (14), une première interface (15) pour la première source d'énergie (K) est disposée sur un premier côté de la boîte de vitesses (10) et une deuxième interface (16) pour la deuxième source d'énergie (M) sur un deuxième côté de la boîte de vitesses (10), opposé à la première source d'énergie (K).

4. Unité de transmission (1) selon la revendication 2 ou 3,
**caractérisée en ce**
**que**, vue le long de l'axe (14) du mécanisme de transmission, la boîte de transfert (13) est disposée sur un deuxième côté de la boîte de vitesses (10), opposé à la première interface (15) destinée à la première source d'énergie (K), et comporte la deuxième interface (16).

5. Unité de transmission (1) selon l'une des revendications 2 à 4,
**caractérisée en ce**
**que** la boîte de transfert (13) est disposée spatialement entre la boîte de vitesses (10) et la deuxième interface (16) destinée au raccordement de la deuxième source d'énergie (M).

6. Unité de transmission (1) selon l'une des revendications précitées, **caractérisée en ce**
**que** la boîte de vitesses (10) et/ou la boîte de transfert (13) sont conçues comme des engrenages épicycloïdaux et/ou des engrenages planétaires et/ou présentent un axe central commun (14) et/ou dans laquelle l'élément de sortie (AE) forme une cloche rotative (17) dans laquelle sont logés la boîte de vitesses (10) et/ou la boîte de transfert (13) et/ou dans laquelle est aménagé un espace destiné à recevoir la deuxième source de puissance (M).

7. Unité de transmission (1) selon l'une des revendications précédentes, **caractérisée en ce**
**que** la boîte de transfert (13) coopère avec la boîte de vitesses (10) de telle sorte que
- le rapport de couple entre les couples des au moins deux composants de transmission (11, 12) de la boîte de vitesses (10) et
- le rapport des couples des composants de la boîte de transfert (13) reliés fonctionnellement aux deux composants de transmission (11, 12)
- diffèrent de moins de 30 %, et/ou de moins de 20 %, et/ou de moins de 10 % les uns des autres, ou sont identiques entre eux.

8. Unité de transmission (1) selon l'une des revendications précédentes, **caractérisée en ce que**,
qu'au moins un composant de transmission (11, 12) comporte au moins une roue libre (30, 31, 32, 33, 34) et/ou **en ce que** la roue libre (30, 31, 32, 33, 34) est agencée pour coupler de manière solidaire en rotation le composant de transmission (11, 12) à un composant rigide en rotation (35) et/ou à l'élément de sortie (AE) et/ou à la première source d'énergie (K) et/ou à la deuxième source d'énergie (M).

9. Unité de transmission (1) selon la revendication 8,
**caractérisée en ce**
**que** la roue libre (30, 31, 32, 33, 34) est agencée de telle sorte qu'au moins un composant (11, 12) soit couplé de manière solidaire en rotation, dans au moins un rapport de vitesse et/ou par l'intermédiaire d'une roue libre (30, 31, 32, 33, 34) est couplé en rotation avec un composant fixe (35), de sorte qu'au moins un circuit de puissance (L1, L2) entre la boîte de transfert (13) et la boîte de vitesses (10) ne transmet aucune puissance.

10. Unité de transmission (1) selon l'une des revendications précédentes, **caractérisée en ce**
**que** le premier circuit de transmission (L1) de la boîte de transfert (13) est relié à une couronne dentée (18) de la boîte de vitesses (10) et/ou le deuxième circuit de transmission (L2) est relié à un pignon solaire (19) de la boîte de vitesses (10), de sorte que la couronne dentée (18) constitue le premier composant de transmission (11) et la roue solaire (19) le deuxième composant de transmission (12).

11. Unité de transmission (1) selon la revendication 10,
**caractérisée en ce,**
**que** le premier circuit de puissance (L1) s'étend entre une couronne dentée (20) de la boîte de transfert (13) et la couronne dentée (18) de la boîte de vitesses (10), et que le deuxième circuit de transmission (L2) s'étend entre une roue solaire (21) de la boîte de transfert (13) et la roue solaire (19) de la boîte de vitesses (10).

12. Unité de transmission (1) selon l'une des revendications 1 à 9, **caractérisée en ce**
**que** la boîte de vitesses (10) et/ou la boîte de transfert (13) comportent au moins deux engrenages planétaires,
- la première ligne de transmission (L1) de la boîte de transfert (13) est reliée à une couronne dentée (22) d'un engrenage planétaire externe de la boîte de vitesses (10) et/ou le deuxième circuit de transmission (L2) est relié à un porte-satellites (23) d'un engrenage planétaire interne de la boîte de vitesses (10), de sorte que la couronne externe (22) forme le premier composant de transmission (11) et que le porte-satellites interne (23) forme le deuxième composant de transmission (12).

13. Unité de transmission (1) selon la revendication 12, **caractérisée en ce**
**que** le premier circuit de transmission (L1) s'étend entre une couronne dentée (24) d'un engrenage planétaire externe de la boîte de transfert (13) et la couronne extérieure (22) de la boîte de vitesses (10), et que le deuxième circuit de transmission (L2) s'étend entre un porte-satellites (25) de l'engrenage planétaire intérieur de la boîte de transfert (13) et le porte-satellites intérieur (23) de la boîte de vitesses (10).

14. Unité de transmission (1) selon l'une des revendications 1 à 9, **caractérisée en ce**
**que** la boîte de transfert (13) comporte deux engrenages planétaires disposés l'un devant l'autre, le premier circuit de transmission (L1) s'étendant entre une couronne dentée (24) d'un premier engrenage planétaire de la boîte de transfert (13) et la couronne extérieure (22) de la boîte de vitesses (10), et en ce que le deuxième circuit de puissance (L2) s'étend entre un porte-satellites (25) d'un deuxième engrenage planétaire de la boîte de transfert (13) et le porte-satellites intérieur (23) de la boîte de vitesses (10).

15. Ensemble moteur-transmission (100) comprenant une unité de transmission (1) selon l'une des revendications susmentionnées, notamment conçue comme unité d'entraînement pour une bicyclette, comportant une deuxième source d'énergie (M) sous la forme d'un moteur électrique, qui est relié fonctionnellement à la boîte de vitesses (10) au moyen de la boîte de transfert (13) agissant comme un élément intermédiaire entre la deuxième source d'énergie (M) et la boîte de vitesses (10).
